# EUROPEAN PATENT SPECIFICATION

(11) **EP 2 002 597 B1**
(45) Date of publication and mention of the grant of the patent: **05.09.2018**
(21) Application number: 07753881.7
(22) Date of filing: 20.03.2007
(51) Int. Cl.: G06F 21/73, G06F 21/88

(54) **METHOD FOR DETERMINING IDENTIFICATION OF AN ELECTRONIC DEVICE**
VERFAHREN ZUR BESTIMMUNG DER IDENTIFIZIERUNG EINER ELEKTRONISCHEN VORRICHTUNG
PROCÉDÉ POUR DÉTERMINER L'IDENTIFICATION D'UN DISPOSITIF ÉLECTRONIQUE

(30) Priority: 20.03.2006 US 784195 P; 20.03.2006 US 386040
(43) Date of publication of application: 17.12.2008
(73) Proprietor: Absolute Software Corporation, Vancouver, BC V7X 1K8 (CA)
(72) Inventor: GARDNER, Philip, B., Woodbury, MN 55125 (US); VOLODARETS, Victor, New Westminster, B.C. V3M 6N9 (CA)
(74) Representative: Walker, Stephen
(86) International application number: PCT/US2007/007291
(87) International publication number: WO 2007/109366

(56) References cited:
- EP-A2- 1 589 691
- US-A- 4 284 985
- US-A- 6 031 894
- US-A- 6 032 257
- US-A1- 2002 055 848
- US-A1- 2003 153 328
- US-A1- 2005 086 502
- US-A1- 2005 204 162
- US-A1- 2005 216 757
- US-A1- 2006 276 175
- US-A1- 2007 072 620
- US-B1- 6 300 863
- US-B1- 6 950 946
- US-B2- 7 237 267
- US-B2- 7 409 219

## Description

### BACKGROUND OF THE INVENTION

### 1. Field of the Invention

The present invention relates to identification of an electronic device electronically by remote access.

### 2. Description of Related Art

In today's competitive business environment, information technology (IT) is playing an increasingly important role in the exchange of knowledge in day-to-day business as well as personal functions. Individuals, systems, organizations, and other business assets are interconnected in this emerging economic web, and as this IT landscape grows increasingly complex, so does the need to efficiently manage IT assets, including both physical assets and data. As a result, individuals and organizations alike are now, more than ever, are recognizing the need to take control of, manage and secure their computer asset base, in order to preserve their IT investments. It becomes more challenging to protect IP assets with the increase in processing power for mobile computing devices, where more and more individuals have opted for mobile computing devices, either as replacements to their desktop units, or as additional devices for home or small business networks.

Most IT departments will support the statement that conventional asset management solutions can't accurately account for the ever-increasing population of remote and mobile users. In fact, a typical organization will lose up to 15% of its PC assets over a two year period due to PC drift - where assets are not necessarily lost or stolen, but they simply cannot be accounted for due to the many times they've changed owners or departments since first being provisioned. On average, most organizations can only accurately identify 65% of their actual PC a asset base when asked to do an inventory. Best practices demands that IT know where at least 90% of PC assets are located at all times. In a response to recent corporate accounting scandals, identity theft and malicious hacking, governments are establishing regulations that force businesses to protect and be accountable for all sensitive digital information. If organizations do not effectively identify and track all of their computing assets there could be severe regulatory' concerns.

For an asset tracking and/or configuration management application to undertake its tracking function, not only should it be able to resist certain level of tampering by an unauthorized user, it must also be able to accurately identify the physical electronic asset being tracked. Attempts to identify, track, manage and update PC assets and their configurations are further challenged in view of the fact that during a PC's lifecycle it will undergo hardware, software and image changes including: break/fix repairs, configuration changes, operating system reinstalls, hard-drive reformats/replacements, system crashes and user-driven configuration changes. Many of these changes will require a reinstallation of the operating system whereby the original footprint or identification of the PC asset can be disabled or removed. This change, if not diligently recorded and tracked, is the beginning of a PC asset drifting from a known state into an unknown state. These routine PC life cycle operating requirements can increase the complexity and challenge of identifying and tracking PC assets, especially those that are remote and mobile. The challenges in achieving reliable asset identification further create uncertainties in deployment of certain asset control operations, such as undertaking remote data deletion operation to remove sensitive data in a target mobile computer. US2005216757 describes a self-healing tamper resistant software agent concealed in an electronic device.

EP 1 589 691 describes an apparatus for managing computer identity. Heretofore, some computer assets have been identified by relying on firmware serial numbers. This approach is simple and relatively reliable, but hardware changes could cause misidentification. Other computer assets have been identified by software-assigned identifiers, such as serial numbers and/or names. While this approach is also relatively reliable and the identifiers can be easily assigned, it also creates opportunities for reassignment of the identifiers, such as when the device operating system is reinstalled and/or upon a hardware change, either by an authorized user or by tampering by an unauthorized user.

It is therefore desirable to develop a method for intelligently and accurately determining identification of electronic devices electronically.

### SUMMARY OF THE INVENTION

The present invention provides a utility to determine identity of an electronic device electronically, by running a device attribute collection application that collects key attributes in the form of data points of the electronic devices and a device identification application that uses these key data points to link the electronic device to a specific owner or entity. Data points of the device may change over time for reasons such as reconfiguration, repair or normal daily use. The device identification application intelligently tracks changes in key data points associated with the device. Even if the data points change, the device identification application can still identify the device and associate it back to the original owner or entity. This enables consistent tracking of the device over its lifecycle. The device may be identified remotely with the device identification application (e.g., in the event of theft or loss of the device) based on collected data points of the device. The device identification application may be deployed in conjunction with services that may include asset tracking, asset recovery, data delete, software deployment, etc.

In one embodiment, the device attribute collection application and the identification application may be embodied in software, hardware, firmware, or a combination of such.

### BRIEF DESCRIPTION OF THE DRAWINGS

For a fuller understanding of the nature and advantages of the present invention, as well as the preferred mode of use, reference should be made to the following detailed description read in conjunction with the accompanying drawings. In the following drawings, like reference numerals designate like or similar parts throughout the drawings.
FIG. 1 is a schematic diagram depicting representative communication links including networks by which asset tracking may be implemented in accordance with one embodiment of the present invention.
FIG. 2 is a schematic functional block diagram illustrating logic flow of processes undertaken by the device identification application, in accordance with one embodiment of the present invention.
FIG. 3 is a schematic functional block diagram illustrating logic flow of processes undertaken in determining massive change in the data points of a device.
FIG. 4 is a schematic block diagram illustrating the interaction between a device and a server, to undertake device data collection and identification.

### DETAILED DESCRIPTION OF THE PREFERRED EMBODIMENT

The invention is set out in the appended set of claims. The detailed descriptions that follow are presented largely in terms of methods or processes, symbolic representations of operations, functionalities and features of the invention. These method descriptions and representations are the means used by those skilled in the art to most effectively convey the substance of their work to others skilled in the art. A software implemented method or process is here, and generally, conceived to be a self-consistent sequence of steps leading to a desired result. These steps require physical manipulations of physical quantities. Often, but not necessarily, these quantities take the form of electrical or magnetic signals capable of being stored, transferred, combined, compared, and otherwise manipulated. It will be further appreciated that the line between hardware and software is not always sharp, it being understood by those skilled in the art that software implemented processes may be embodied in hardware, firmware, or software, in the form of coded instructions such as in microcode and/or in stored programming instructions.

### Device Identification Overview

The present invention determines identity of the client device by running a device attribute collection application that collects key data points of the electronic devices and a device identification application that uses these key data points to link the electronic device to a specific owner or entity. Data points of the device may change over time for reasons such as reconfiguration, repair or normal daily use. The device identification application intelligently tracks changes in key data points associated with the device. Even if the data points change, the device identification application can still identify the device and associate it back to the original owner or entity. This enables consistent tracking of the device over its lifecycle. The device may be identified remotely with the device identification application (e.g., in the event of theft or loss of the device) based on collected data points of the device. The device identification application may be deployed in conjunction with services that may include asset tracking, asset recovery, data delete, software deployment, etc.

In one embodiment, the device attribute collection application and the device identification application may be embodied in software, hardware, firmware, or a combination of such.

### Overview of Embodiment of Deployment of Device Identification Utility

The device identification utility of the present invention may be deployed as a component of existing asset tracking applications. For example, the device identification utility may be deployed as a component of the AbsoluteTrack, a product developed by Absolute Software Corporation, the assignee of the present invention. Absolute Software has developed and is marketing Computrace, a product and service that securely tracks assets and recovers lost and stolen assets, and AbsoluteTrack, a secure asset tracking, and inventory management, solution powered by the Computrace technology platform. Computrace deploys a stealth agent, which is a software client that resides on the hard drive of client computers. Absolute Software Corporation further improved on the original agent platform by providing an improved tamper resistant servicing Agent for enabling, supporting and/or providing various services relating to management and protection of assets (including without limitation hardware, firmware, software, data, etc.), including services such as data delete, firewall protection, data encryption, location tracking, message notification, and software deployment and updates. The servicing functions can be controlled by a remote server. The technology underlying various Computrace products and services have been disclosed and patented in the U.S. and other countries, which patents had been commonly assigned to Absolute Software Corporation. See, for example, U.S. patent nos. 5,715,174; 5,764,892; 5,802,280; 6,244,758; 6,269,392; 6,300,863; and 6,507,914; and related foreign patents. Details of the persistent agent are disclosed in co-pending U.S. Patent Application No. 11/093,180, filed March 28, 2005 (now published U.S. Patent Publication No. US2005-0216757; which corresponds to PCT Application Publication No. WO 2006/102399) and U.S. Patent Application No. 11/386,040, filed March 20, 2006 (now published U.S. Patent Publication No. US2006-0272020). Further information concerning AbsoluteTrack has been published by Absolute Software Corporation (e.g., AbsoluteTrack - Secure Computer Asset Tracking Solution, a white paper, published April 25, 2003).

In one embodiment of the present invention, device data collection and identification may take advantage of the persistent agent, to be deployed as a service by the persistent agent. The device attribute collection application of the present invention may be deployed by or made part of the Agent. Once installed, the device attribute collection application automatically contacts a monitoring center on a regular or scheduled basis transmitting location information and all auto-discovered asset data points. The device identification application of the present invention may be deployed as one of or part of the servicing functions at the remote server. For purpose of completeness, the device identification utility (i.e., data point collection and device identification) of the present invention will be described below in reference to asset tracking function, as elaborated below.

### Tracking Function Overview

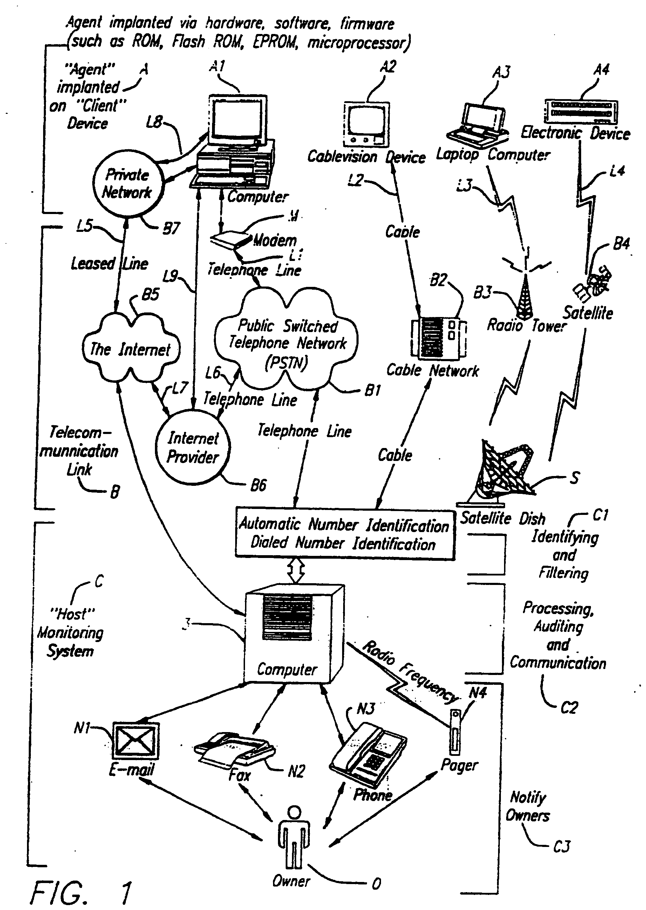

Asset tracking function is an example of the services that can be enabled with, supported by and/or provided with the device identification application of the present invention. Referring to Fig. 1, the asset tracking system in accordance with one embodiment of the present invention involves a client/server architecture, which may comprise the following main components: (a) client device A consisting of, for example, any one of the electronic devices shown which have been implanted with a persistent Agent. The Agent software runs on the client devices for the purpose of reporting deploying applications including reporting information to and receiving instructions from a remote server to program the Agent to support and execute a desired function, (b) a communication link B, such as an information exchange network, which may include switched communications networks, the Internet, private and public intranet, radio networks, satellite networks, and cable networks; and (c) a host monitoring system C, which include a host monitoring server 3 that monitors the communications between the client device A and the host monitoring system C, which is contacted on a regular or scheduled basis by the client devices records information from the client devices. The monitoring server also provides instructions to the client on what actions to perform, including what actions the client is to perform, what data to collect and the clients next scheduled call time.

In accordance with the present invention, the host monitoring system C is implemented with the device identification application, which remotely determines the identity of the client devices being monitored, by evaluating the data points collected using the device attribute collection application residing in the client devices (e.g., either a separate application or part of the Agent). The client devices contact the monitoring server via the communication link B (e.g., an IP connection or via a dial-up telephone connection). The host monitoring system C may include a reporting and administration portal, which provides customers, administrators and asset tracking service providers the ability to view data and manage the functions of the monitoring server and the client devices.

With the exception of the device identification application, each of these components has been fully disclosed in the copending U.S. Patent Application No. 11/386,040, filed March 20. 2006 (now U.S. Patent Application Publication No. US2006-0272020; which corresponds to PCT Application Publication No. WO 2006/102399).

Referring to FIG. 1, useful client devices A that can be identified with the device identification application in accordance with the present invention (and in which the persistent servicing Agent can be implemented) include, but are not limited to, general or specific purpose digital processing, information processing and/or computing devices, which devices may be standalone devices or a component part of a larger system (e.g., a mass storage device), portable, handheld or fixed in location. Different types of client devices may be in the form of desktop client computing devices, portable computing devices (e.g., laptop and notebook computers), or hand-held devices (e.g., cell phones, PDAs (personal digital assistants)), personal electronics (e.g., personal digital media players, personal gaming devices), etc.), which have the ability to communicate to an external server, as further explained below. The client devices may be selectively operated, activated or configured by a program, application, routine and/or a sequence of instructions and/or logic stored in the devices, in addition to the operating systems resident in the devices. In short, use of the methods described and suggested herein is not limited to a particular processing configuration. By way of example and not limitation, the present invention is described in reference to examples of deployments and implementations in reference to a laptop or notebook computer as the client device A (computer A1 is schematically represented as a desktop device, but may instead comprise a portable computing device). Fig. 1 is a schematic representation of the communication links B in the form of information exchange networks in which the present invention may be deployed for asset identification and tracking. The information exchange network accessed by the device identification application in accordance with the present invention may involve, without limitation, distributed information exchange networks, such as public and private computer networks (e.g., Internet, Intranet, WAN, LAN, etc.), value-added networks, communications networks (e.g., wired or wireless networks), broadcast networks, cable networks, radio networks, and a homogeneous or heterogeneous combination of such networks. As will be appreciated by those skilled in the art, the networks include both hardware and software and can be viewed as either, or both, according to which description is most helpful for a particular purpose. For example, the network can be described as a set of hardware nodes that can be interconnected by a communications facility, or alternatively, as the communications facility, or alternatively, as the communications facility itself with or without the nodes. It will be further appreciated that the line between hardware, firmware and software is not always sharp, it being understood by those skilled in the art that such networks and communications facility, and the components of the persistent agent technology platform, involve software, firmware and hardware aspects.

In the co-pending U.S. Patent Application No. 11/386,040, one of the important functions of the Agent is to contact the host monitoring system C to report information relating to its associated client device A. The present invention provides an improvement to the earlier embodiments. According to one embodiment disclosed therein, each client device A has attributes that are collected and delivered by the client device A to the host monitoring station C. The present invention provides a further means of identifying the identity of the tracked client device, without solely relying on the device identification number(s) assigned, by providing an application to determine identity of the client device electronically using such attributes.

### Device Identification Utility

The general approach includes:
1) Attribute collection.
2) Collected attributes transmitted to the server (optionally with optimization to only upload them if the CRC for the XML document has changed), and inventory record maintained.
3) ESN (Electronic Serial Number) assignment process and storage of changed attributes.
4) Optionally storing the extended history of the attribute changes.

### a. Device Attribute Collection Application

The present invention determines identity of the client device by running a device attribute collection application that collects key data points of the electronic devices. The device identification application (e.g., residing at a remote server) considers these key data points to link the electronic device to a specific owner or entity. For example, the device attribute collection application may be embodied as a service enabled and supported by the persistent agent, in accordance with one embodiment of the present invention. The device identification scheme according to the present invention would be less susceptible to malicious tampering attempts to mask the device identity.

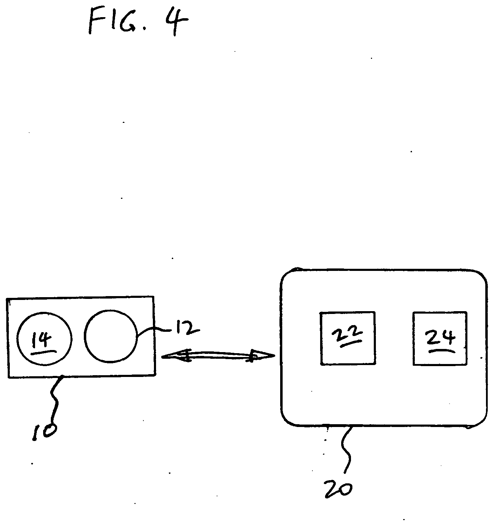

In one embodiment, the data is gathered and delivered when the persistence agent calls the monitoring server. Referring to Fig. 4, in one embodiment, during the call, a specific device attribute collection application program 12 (e.g., in the form of a DLL (dynamic link libraries)) is downloaded from a server 20 into a memory in the device 10 by the agent therein, and the agent invokes a function in this inventory DLL. This application gathers the data points (e.g., using the mechanisms listed on the right column of Table 1 below). The DLL is not limited by the mechanisms listed; it can be extended to include additional mechanisms as may be available in standard API's (Application Program Interfaces) or custom built to collect existing data points more reliably or to collect additional data points. (Alternatively, the device attribute collection application may be deployed in the server, to remotely obtain device attributes.)

The data points collected and applied to device identification may include the following:
i. Device's Make, Model
ii. Device's Motherboard Serial Number
iii. Device's UUID (Universal Unique Identifier)
iv. Hard drive Serial Number
v. Mac address of multiple network cards
vi. Ram serial number
vii. Battery Serial number

The list above is an example of a subset of data points collected during the interaction with a device. An embodiment of a full list of data collected and to be stored as an inventory record by the device identification application at the server is included in Table 1 below, for a computer as an example of a device being tracked. Also listed in Table 1 are the respective mechanisms to collect these data by the device attribute collection application.

**Table 1: Full list of Data points collected and stored in an inventory record.**

| **Data Point** | **Data Gathering Mechanism** |
|---|---|
| ComputerMakeWMI | WMI API |
| ComputerModelWMI | WMI API |
| ComputerSerialWMI | WMI API |
| ComputerMake | MAPMEM driver; Read DMI info |
| ComputerModel | MAPMEM driver; Read DMI info |
| ComputerSerial | MAPMEM driver; Read DMI info |
| ComputerAsset0 | WMI API |
| ComputerAsset1 | WMI API |
| SystemSMBIOSVersion | Windows Registry |
| SystemBiosVersion | Windows Registry |
| SystemBiosDate | Windows Registry |
| BaseBoardVersion | WMI API |
| HDDSerialNumber0 | S.M.A.R.T API |
| HDDSerialNumber1 | S.M.A.R.T API |
| HDDSerialNumber2 | S.M.A.R.T API |
| HDDSerialNumber3 | S.M.A.R.T API |
| ComputerName | WIN API |
| MACAddress0 | SNMP, if fails NetBIOS |
| MACAddress 1 | SNMP, if fails NetBIOS |
| OSProductKey | From "encrypted" MS value in registry |
| IBMComputraceStatus | Computrace driver |
| BatteryDeviceID | WMI API |
| ComputerUUID | MAPMEM driver; Read DMI info |
| GatewayString0 | MAPMEM driver; Read DMI info |
| GatewayString1 | MAPMEM driver; Read DMI info |
| GatewayString2 | MAPMEM driver; Read DMI info |
| DELLCTStatus | Computrace driver |
| DELLInterfaceStatus | Computrace driver |
| RAMSerialNumber | WMI API |
| Inventory Version # | Inserted by Inventory DLL |

It is noted that MAPMEM driver (e.g., developed by Absolute) may only be required if serial number is less than a minimum number of characters (e.g., five characters,) or WMI call fails. Otherwise information from WMI may be used instead. Should S.M.A.R.T API fails (i.e., SN is returned empty), WMI may be used to get HDDSerialNumber. Some of the data points may be specific for certain makes and/or models of devices (e.g., GatewayString data is specific for GATEWAY brand of computers only).

### b. Inventory Record for Device Identification

During each interaction with the persistent agent, an inventory record is created with this data by the device identification application. The inventory record is a record of all specific data points collected at one instance that constitutes a device's unique identification or characteristics (e.g., an embodiment of an inventory record is show in Table 1). These inventory records are logged to create a history of the asset's key data points. The function to identify the device would be enhanced by using these additional data points, as they provide a more comprehensive and dynamic profile of the device (i.e., accommodating continuous changes to the device over the life history of the device), which can be tracked over the device's life history.

Referring to Fig. 4, in one embodiment, DLL creates a file in XML format that is uploaded to the server 20 (or another server different from the server 20) and parsed into the database to form an inventory record. The server 20 includes a device identification application 22, which receives the XML file from the device attribute collection application 12 residing in the device 10. New and existing inventory records may be stored in an inventory record database 24. The format of the XML file is shown by a sample in Table 2.

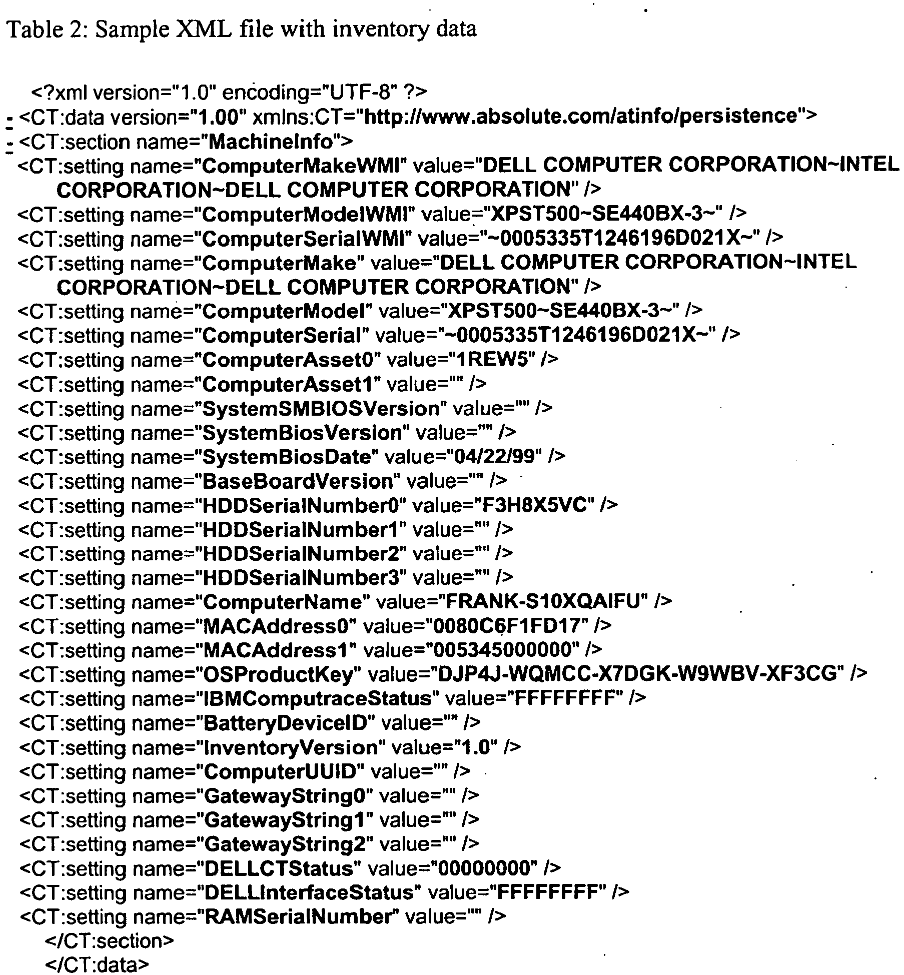

The data point collection application is configured to use these key data points in the inventory records, match it with data that is reported during the agent call, and link the device to a specific owner or entity. Data points of the device change over time for reasons such as reconfiguration, repair or normal maintenance. The application intelligently handles changes in key data points. Even if the data points change, the application can still identify the device and link it back to the original owner or entity. This enables consistent tacking of the device over its lifecycle. In case of theft or loss, the device can be identified remotely with software. The details of the device identification application are described below.

### c. Device Identification Application

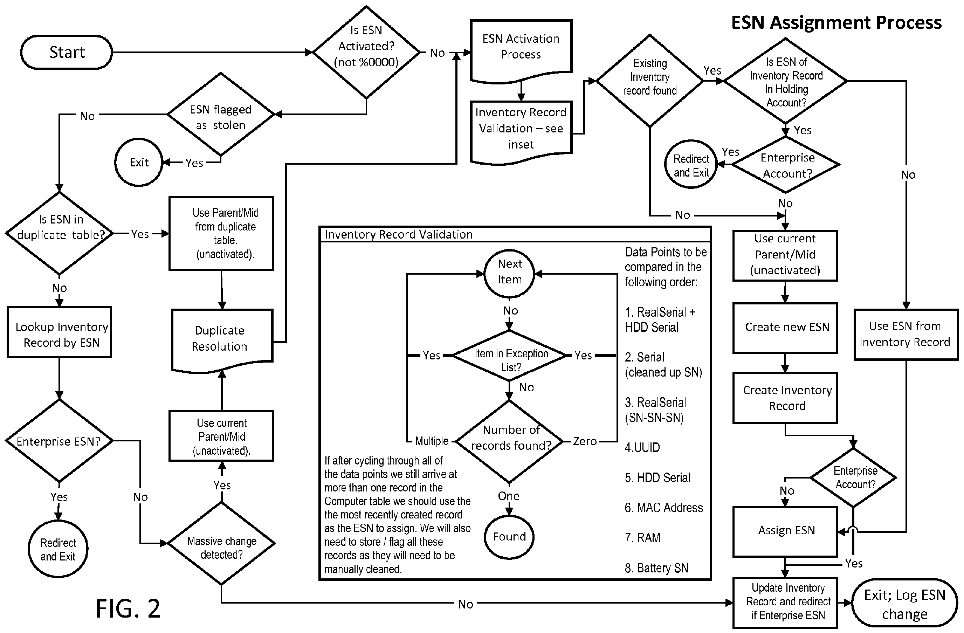

Fig. 2 is a functional block diagram illustrating the logic flow of the device identification application 22 residing at, for example, a monitoring server 20 in Fig. 4. The application performs at least the following primary functions:
i. matching the key data points gathered from the device to the unique identifier number (e.g., Electronic Serial Number - ESN) assigned to the device.
ii. handles new devices to create a baseline inventory record.
iii. recognizing the device after subsequent changes in hardware components.

On an initial contact with a new device, an inventory record is created and a unique identifier (ESN) is assigned in the inventory record database 24 and also written on the device hard drive 14. On subsequent contacts, the ESN written on the device hard drive is matched to the inventory record in the inventory record database 24, and the other key data points are updated. When an agent contacts the monitoring server 20, the device attribute collection application 12 (e.g., an inventory DLL) is run to collect the inventory data, and an ESN, if that may have been previously written on the device hard drive 14, is retrieved. Below are possible scenarios.

### 1. ESN Assignment

If an ESN has not been assigned to the computer (i.e., the last 4 digits are 0's), (or if an earlier assigned ESN is misidentified, e.g., as a result of tampering), it means that either it is a new installation, or the hard drive has been wiped and the persistence algorithm from BIOS has restored the agent. If ESN assignment is needed, the right hand side of the flow diagram in Fig. 2 is undertaken, and an ESN activation process is executed. For example, in case of a stolen device, the ESN written on the hard drive my have been erased or tampered with, so a reverse lookup is done using the key data points and an ESN is found and re-written to the hard drive. This reverse lookup is also used to match the device to its rightful owner. In connection with the ESN activation process, using the data points collected by the device attribute collection application, the inventory record is validated against the existing inventory records stored in the inventory record database 24. According to the embodiment illustrated in the Inventory Record Validation insert in Fig. 2, the following device data points by the current attribute collection process are matched against those in the previously stored inventory records in the following order, for example:
i. RealSerial + HDDSerial
ii. Serial number (if the serial numbers for particular makes/models are poorly formatted, reformatting of the serial number may be undertaken)
iii. RealSerial (SN∼SN∼SN; BIOS-motherboard-system enclosure serial number)
iv. UUID
v. HDD Serial
vi. MAC address
vii. RAM serial number
viii. Battery serial number

Specifically, prior to matching the data points, an exception table is looked up to see if the data point is in the exception table. This is to ensure known non-unique data points are not used in ESN determination. Some generic no-name devices are known to have either blank serial numbers or a non-unique serial number that exists on multiple devices. A list of these known non-unique identifiers is maintained in the exception table. If there is an exception, the data point is ignored, and the next item of data point is matched. If a particular data point item is not on the exception list, a determination is made as to how many existing inventory records are found having such data point item. If instead no existing inventory record or multiple existing inventory records are found, that particular data point item is ignored and the next item matched. Any multiple records found in the process may be "cleaned" to remove or reduce issues for future inventory record validation. If only one existing inventory record is found, then the inventory record corresponding to the collected data point item is deemed to be found and a match of the device in relation to such existing inventory record is deemed to have been achieved. The ESN of the existing inventory record is checked to determine if it is in a holding account. If not in the holding account, such ESN is assigned to the device (e.g., written to the device hard-drive) and the inventory record for the device is updated. If in a holding account, and if it is an account that has been pre-designated to be monitored by a specific host monitoring center (e.g., an enterprise account managed by an associated monitoring center), the client device is instructed to call back to that monitoring center. If not an enterprise account, the current Parent (i.e., ID which can be used to identify the account into which an ESN should be assigned) and MID (i.e., media ID; unique identifier assigned when the installation media is created) are used to create a new ESN (i.e., "Parent" + MID become the prefix for the new ESN).

If instead no unique existing inventory record or multiple existing inventory records are found after all the device data point items had been checked during the inventory record validation process, then the most recently created inventory record (i.e., the one comprising the currently collected device attributes) for purpose of ESN assignment. The current Parent and MID are used to create a new ESN (i.e., "Parent" + MID become the prefix for the new ESN).

Once the new ESN has been created in accordance with either of the above logic flow, a new inventory record is created. If not an enterprise account, the new ESN is assigned to the device and the inventory record database is updated. If an enterprise account, the device is redirected to contact the associated or designated server for further handling.

### 2. Existing Device ESN - Validation

In the case where the calling agent provides an existing ESN (i.e., the last 4 digits are not 0's) that was retrieved from the device (e.g., stored on the device hard drive), the device can already be uniquely identified (unless it is an invalid ESN, in which case it would be treated as though an ESN does not exist, and the earlier described ESN assignment process is undertaken). In this case, the application checks for validity of the ESN. The ESN on the hard drive can be invalid for a number of reasons, such as:
i. The device has an image of another device on the hard drive. Some IT departments create a master system, create a software image of the master systems and deploy these images on multiple devices.
ii. A hard disk has been swapped from one device to another, during normal maintenance activities. These problems can be automatically detected and resolved.

The application first checks if the calling agent has an activated (non zero) ESN. If yes, the ESN is searched to see if it is stolen. This is because the calling device's ESN is not reassigned or changed if it is stolen, to retain the consistency and to keep the historical tracking history intact. If the ESN is not flagged stolen, then a known duplicate list is searched for automatic resolution. This may include assigning a new ESN to one or both of the duplicate records, for example using the ESN activation process earlier described.

### 3. Massive Change

If activated ESN is calling and the stolen/duplicate checks did not flag the device as being stolen, then the inventory record of the ESN in the inventory record database is matched with the inventory record created based on device data points collected during the current contact. (For enterprise ESN, the device is redirected, as noted above.) If less than a predetermined number of data points (e.g., two or less) have changed, then the inventory record in the inventory record database is updated for checks during subsequent contacts. This process distinguishes routine maintenance activities if the number of changes detected in a single contact is within the predetermined number, from massive changes if the number of changes in a single contact is more than the predetermined number. In this example, if three or more data points are different between the recorded inventory record and calling data points, then a 'massive change' situation is triggered, where the ESN is not considered valid. This is because enough data points are different that it cannot be considered the same device. It is assumed that either the ESN on the device was duplicated or otherwise tampered with, or substantial maintenance on the device took place, and the original constituent parts are considered to be the original device, and thus to be a new device.

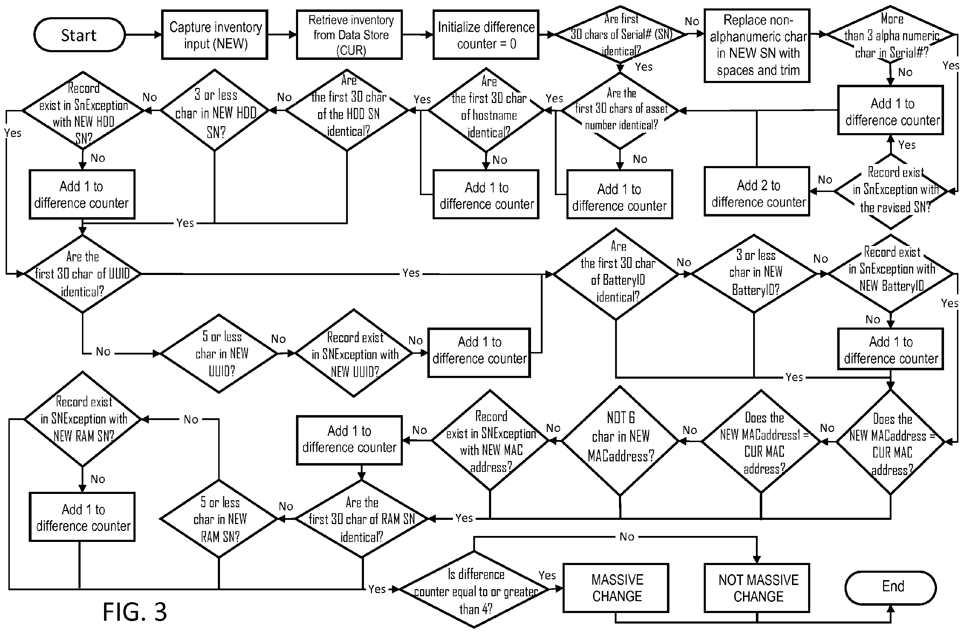

Fig. 3 is a schematic function block diagram illustrating the processes undertaken to implement massive change determination, in accordance with one embodiment of the present invention. Various checks are undertaken to determine the number of data points of the device (e.g., those discussed earlier above) have experienced changes. A difference counter keeps track of the number of data points that have changed, by incrementing from an initial zero count. In the illustrated embodiment, if the difference counter has a value that is equal or greater than "2" (or some other threshold value), massive change status is determined to have occurred.

In this scenario, the application treats it as a new device, and assigns it a new ESN from the same customers account. In this case, the application switches to the right hand side of the logic flow diagram, and the ESN activation process earlier described is undertaken.

### 4. Exit

At the logical exit of the processes illustrated in Fig. 2, the inventory record in the inventory record database matches the data points collected during that contact, and the ESN in the inventory record database matches the ESN written on the device hard drive. This repositions the device for future inventory record checking, which may be according to a predetermined schedule, such as that described in the patent publications identified herein regarding asset tracking. At this point, the inventory record may be relied upon to link the client device to its owner (an individual or entity), for example based on prior established owners information in relation to the inventory records stored in the inventory record database.

### 5. Further Enhancements

The embodiment described above effectively and uniquely identifies a device. The logic described above can be extended to include more data points, to collect data points using different mechanism, and using varying matching mechanisms, not limited to the application processes and data described above, without departing from the scope of the present invention. Hence the device identification application of the present invention should be considered extensible and not bound by the specific algorithms, data points, data collection mechanism or usage of specific limited number of data points by the application.

Data points of the device may change over time for reasons such as reconfiguration, repair or normal daily use. The device identification application intelligently tracks changes in key data points associated with the device. Even if the data points change, the device identification application can still identify the device and associate it back to the original owner or entity. This enables consistent tracking of the device over its lifecycle. The device may be identified remotely with the device identification application (e.g., in the event of theft or loss of the device). The device identification application may be deployed in conjunction with services that may include asset tracking, asset recovery, data delete, software deployment, etc.

The process and system of the present invention has been described above in terms of functional modules in block diagram format. It is understood that unless otherwise stated to the contrary herein, one or more functions may be integrated in a single physical device or a software module in a software product, or one or more functions may be implemented in separate physical devices or software modules at a single location or distributed over a network, without departing from the scope of the present invention.

It is appreciated that detailed discussion of the actual implementation of each module is not necessary for an enabling understanding of the invention. The actual implementation is well within the routine skill of a programmer and system engineer, given the disclosure herein of the system attributes, functionality and inter-relationship of the various functional modules in the system. A person skilled in the art, applying ordinary skill can practice the present invention without undue experimentation.

While the invention has been described with respect to the described embodiments in accordance therewith, it will be apparent to those skilled in the art that various modifications and improvements may be made without departing from the scope of the invention. For example, the information extraction application can be easily modified to accommodate different or additional processes to provide the user additional flexibility for web browsing. Accordingly, it is to be understood that the invention is not to be limited by the specific illustrated embodiments, but only by the scope of the appended claims.

## Claims

1. A method of determining identity of an electronic device (10), comprising:
obtaining a plurality of attributes of the electronic device (10) using an attribute collection application (12) residing at the electronic device (10); and
searching existing inventory records (24) of a plurality of electronic devices using an identification application (22) residing at a remote server (20), to identify a unique inventory record corresponding to the electronic device (10);
**characterised by** determining, for a first of the plurality of attributes, how many existing inventory records have the first attribute;
wherein, if only one existing inventory record has the first attribute, determining that existing inventory record to be the unique inventory record; and
wherein, if no or multiple existing inventory records have the first attribute, determining that there is only one existing inventory record having a second of the plurality of attributes and determining that existing inventory record to be the unique inventory record;
further **characterised in that** the identification application (22) determines the identity of the device (10) from the unique inventory record if it determines that less than a predetermined number of collected attributes are different from corresponding attributes in the unique inventory record;
wherein if it is determined that the predetermined number of collected attributes are different, the device (10) is determined to be a new device and a new identifier is assigned to the device (10).

2. The method as in claim 1, the method comprising looking up an exception table to determine that the first attribute is not in the exception table prior to determining how many existing inventory records have the first attribute, wherein the exception table comprises a list of non-unique attributes.

3. The method as in claim 2, the method comprising looking up the exception table to determine that the second attribute is not in the exception table prior to determining how many existing inventory records have the second attribute.

4. The method as in claim 1, further comprising the step of communicating the plurality of attributes to the remote server.

5. The method as in claim 1, wherein the searching step comprises matching the plurality of attributes against corresponding attributes stored in existing records (24) for a plurality of electronic devices.

6. The method as in claim 1, further comprising assigning an identifier to the device (10) if an identifier has not been previously assigned to the device (10) or a valid identifier is not available from the device (10).

7. The method as in claim 6, wherein the identifier is assigned by retrieving an identifier from the unique record.

8. The method of claim 1, wherein the plurality of attributes include data points relating to hardware and/or software deployed in the device (10).

9. The method of claim 8, comprising determining, for each of the plurality of attributes in sequence, whether only one existing inventory record has the attribute, and if so determining that one existing inventory record to be the unique inventory record.

10. The method of claim 9, wherein upon identifying a unique inventory record, an identifier associated with the unique inventory record is assigned to the device (10).

11. The method of any of claims 8 to 10, wherein the data points include at least two of:
i. Device Make and/or Model;
ii. Device Motherboard Serial Number;
iii. Device UUID (Universal Unique Identifier);
iv. Hard drive Serial Number;
v. MAC address of multiple network cards;
vi. RAM serial number; and
vii. Battery Serial number.

12. An electronic device (10) comprising an attribute collection application (12) which collects a plurality of attributes including data points relating to hardware and/or software deployed in the device (10), which attributes are transmitted to a remote server (20) to identify a unique inventory record corresponding to the device (10) by determining, for a first of the plurality of attributes, how many existing inventory records have the first attribute,
wherein, if only one existing inventory record has the first attribute, determining that existing inventory record to be the unique inventory record; and
wherein, if no or multiple existing inventory records have the first attribute, determining that there is only one existing inventory record having a second of the plurality of attributes and determining that existing inventory record to be the unique inventory record;
wherein the identity of the device (10) is determined based on the unique inventory record if less than a predetermined number of collected attributes are different from corresponding attributes in the unique inventory record,
wherein if it is determined that the predetermined number of collected attributes are different, the device (10) is determined to be a new device and a new identifier is assigned to the device (10).

13. A server (20) for remotely identifying an electronic device (10) connected to a network, comprising an identification application (22) which receives a plurality of attributes including data points relating to hardware and/or software deployed in the device (10), and searches existing records (24) of a plurality of electronic devices to identify, based on the attributes, a unique record corresponding to the device (10) by determining, for a first of the plurality of attributes, how many existing inventory records have the first attribute,
wherein, if only one existing inventory record has the first attribute, the server determines that existing inventory record to be the unique inventory record; and
wherein, if no or multiple existing inventory records have the first attribute, the server determines that there is only one existing inventory record having a second of the plurality of attributes and determining that existing inventory record to be the unique inventory record;
wherein the server determines the identity of the device (10) from the unique inventory record if it has been identified and if less than a predetermined number of collected attributes are different from corresponding attributes in the unique inventory record, wherein if it is determined that the predetermined number of collected attributes are different, the device (10) is determined to be a new device and a new identifier is assigned to the device (10).

14. The server of claim 13, wherein the server looks up an exception table to determine that the first attribute is not in the exception table prior to determining how many existing inventory records have the first attribute, wherein the exception table comprises a list of non-unique attributes.

15. The server of claim 14, wherein the server looks up the exception table to determine that the second attribute is not in the exception table prior to determining how many existing inventory records have the second attribute.

## Patentansprüche

1. Ein Verfahren zur Identifikation eines elektronischen Geräts (10), das Folgendes umfasst:
Erhalt einer Vielzahl von Attributen des elektronischen Geräts (10) unter Verwendung einer Attributsammelanwendung (12), die sich am elektronischen Gerät (10) befindet, und
Durchsuchung vorhandener Inventareinträge (24) einer Vielzahl von elektronischen Geräten unter Verwendung einer Identifikationsanwendung (22), die sich an einem entfernten Server (20) befindet, um einen eindeutigen Inventareintrag zu identifizieren, der dem elektronischen Gerät (10) entspricht;
**gekennzeichnet durch** die Bestimmung, für ein erstes der Vielzahl von Attributen, wie viele vorhandene Inventareintäge das erste Attribut aufweisen;
wobei, wenn nur ein vorhandener Inventareintrag das erste Attribut aufweist, bestimmt wird, dass der vorhandene Inventareintrag der eindeutige Inventareintrag ist, und wobei, wenn keine oder mehrere vorhandene Inventareinträge das erste Attribut aufweisen, bestimmt wird, dass nur ein vorhandener Inventareintrag ein zweites der Vielzahl von Attributen aufweist, und bestimmt wird, dass der vorhandene Inventareintrag der eindeutige Inventareintrag ist;
ferner **dadurch** gekennzeichnet, dass die Identifizierungsanwendung (22) die Identität des Geräts (10) aus dem eindeutigen Inventareintrag ermittelt, wenn sie bestimmt, dass weniger als eine im Voraus festgelegte Anzahl von gesammelten Attributen sich von entsprechenden Attributen im eindeutigen Inventareintrag unterscheidet;
wobei, falls bestimmt wird, dass die im Voraus festgelegte Anzahl von gesammelten Attributen unterschiedlich ist, das Gerät (10) als ein neues Gerät identifiziert wird und dem Gerät (10) eine neue Kennung zugeordnet wird.

2. Das Verfahren nach Anspruch 1, wobei das Verfahren das Nachschlagen in einer Ausnahmetabelle zur Bestimmung, dass das erste Attribut nicht in der Ausnahmetabelle ist, vor der Bestimmung, wie viele vorhandene Inventareinträge das erste Attribut aufweisen, umfasst, wobei die Ausnahmetabelle eine Liste von nicht eindeutigen Attributen enthält.

3. Das Verfahren nach Anspruch 2, wobei das Verfahren das Nachschlagen in der Ausnahmetabelle zur Bestimmung, dass das zweite Attribut nicht in der Ausnahmetabelle ist, vor der Bestimmung, wie viele vorhandene Inventareinträge das zweite Attribut aufweisen, umfasst.

4. Das Verfahren nach Anspruch 1, das zudem den Schritt der Übermittlung der Vielzahl von Attributen an den entfernten Server umfasst.

5. Das Verfahren nach Anspruch 1, wobei der Suchschritt den Vergleich der Vielzahl von Attributen mit entsprechenden Attributen umfasst, die in vorhandenen Einträgen (24) für mehrere elektronische Geräte gespeichert sind.

6. Das Verfahren nach Anspruch 1, das zudem die Zuordnung einer Kennung zum Gerät (10) umfasst, wenn dem Gerät (10) zuvor noch keine Kennung zugeordnet wurde oder keine gültige Kennung vom Gerät (10) verfügbar ist.

7. Das Verfahren nach Anspruch 6, wobei die Kennung durch den Abruf einer Kennung aus dem eindeutigen Inventareintrag zugeordnet wird.

8. Das Verfahren nach Anspruch 1, wobei die Vielzahl von Attributen Datenpunkte umfasst, die sich auf die im Gerät (10) eingesetzte Hardware und/oder Software beziehen.

9. Das Verfahren nach Anspruch 8, das für jedes der Vielzahl von Attributen der Reihe nach die Bestimmung umfasst, ob nur ein vorhandener Inventareintrag das Attribut aufweist, und wenn dies der Fall ist, die Bestimmung, dass ein vorhandener Inventareintrag der eindeutige Inventareintrag ist.

10. Das Verfahren nach Anspruch 9, wobei bei der identifikation eines eindeutigen Inventareintrags dem Gerät (10) eine Kennung zugeordnet wird, die mit dem eindeutigen Inventareintrag verknüpft ist.

11. Das Verfahren nach einem der Ansprüche 8 bis 10, wobei die Datenpunkte mindestens zwei der folgenden Elemente umfassen:
i. Gerätehersteller und/oder Modell,
ii. Hauptplatinenseriennummer,
iii. Universally Unique Identifier (UUID) des Geräts
iv. Festplattenseriennummer,
v. MAC-Adresse mehrerer Netzwerkkarten,
vi. RAM-Seriennummer und
vii. Akkuseriennummer.

12. Ein elektronisches Gerät (10) mit einer Attributsammelanwendung (12), die eine Vielzahl von Attributen, einschließlich Datenpunkten mit Bezug zur im Gerät (10) eingesetzten Hardware und/oder Software, sammelt, wobei diese Attribute an einen entfernten Server (20) übertragen werden, um einen eindeutigen Inventareintrag, der dem Gerät (10) entspricht, zu identifizieren, indem
für ein erstes der Vielzahl von Attributen bestimmt wird, wie viele vorhandene Inventareinträge das erste Attribut aufweisen,
wobei, wenn nur ein vorhandener Inventareintrag das erste Attribut aufweist, bestimmt wird, dass der vorhandene Inventareintrag der eindeutige Inventareintrag ist, und
wobei, wenn keine oder mehrere vorhandene Inventareinträge das erste Attribut aufweisen, bestimmt wird, dass nur ein vorhandener Inventareintrag ein zweites der Vielzahl von Attributen aufweist, und bestimmt wird, dass der vorhandene Inventareintrag der eindeutige Inventareintrag ist;
wobei die Identität des Geräts (10) basierend auf dem eindeutigen Inventareintrag bestimmt wird, wenn sich weniger als eine im Voraus festgelegte Anzahl von gesammelten Attributen von entsprechenden Attributen im eindeutigen Inventareintrag unterscheidet,
wobei, falls bestimmt wird, dass die im Voraus festgelegte Anzahl von gesammelten Attributen unterschiedlich ist, das Gerät (10) als ein neues Gerät identifiziert wird und dem Gerät (10) eine neue Kennung zugewiesen wird.

13. Ein Server (20) zur Fernidentifikation eines elektronischen Geräts (10), das mit einem Netzwerk verbunden ist, der eine Identifikationsanwendung (22) umfasst, die eine Vielzahl von Attributen einschließlich Datenpunkten in Bezug auf Hardware und/oder Software im Gerät (10) empfängt, und vorhandene Einträge (24) einer Vielzahl von elektronischen Geräten durchsucht, um basierend auf den Attributen einen eindeutigen Eintrag zu identifizieren, der dem Gerät (10) entspricht, indem für ein erstes der Vielzahl von Attributen bestimmt wird, wie viele vorhandene Inventareinträge das erste Attribut aufweisen,
wobei, wenn nur ein vorhandener Inventareintrag das erste Attribut aufweist, der Server bestimmt, dass der vorhandene Inventareintrag der eindeutige Inventareintrag ist, und
wobei, wenn keine oder mehrere existierende Inventareinträge das erste Attribut aufweisen, der Server bestimmt, dass es nur einen vorhandenen Inventareintrag gibt, der ein zweites der Vielzahl von Attributen aufweist, und bestimmt, dass der vorhandene Inventareintrag der eindeutige Inventareintrag ist;
wobei der Server die Identität des Geräts (10) aus dem eindeutigen Inventareintrag ermittelt, wenn sie identifiziert wurde und wenn sich weniger als eine im Voraus festgelegte Anzahl von gesammelten Attributen von entsprechenden Attributen im eindeutigen Inventareintrag unterscheidet, wobei, wenn bestimmt wird, dass eine im Voraus festgelegte Anzahl von gesammelten Attributen unterschiedlich ist, das Gerät (10) als ein neues Gerät identifiziert wird und dem Gerät (10) eine neue Kennung zugeordnet wird.

14. Der Server nach Anspruch 13, wobei der Server in einer Ausnahmetabelle nachschlägt, um zu bestimmen, dass das erste Attribut nicht in der Ausnahmetabelle ist, bevor er bestimmt, wie viele vorhandene Inventareinträge das erste Attribut aufweisen, wobei die Ausnahmetabelle eine Liste von nicht eindeutigen Attributen enthält.

15. Der Server nach Anspruch 14, wobei der Server in der Ausnahmetabelle nachschlägt, um zu bestimmen, dass das zweite Attribut nicht in der Ausnahmetabelle ist, bevor er bestimmt, wie viele vorhandene Inventareinträge das zweite Attribut aufweisen.

## Revendications

1. Méthode pour déterminer l'identité d'un dispositif électronique (10), consistant à :
obtenir plusieurs attributs du dispositif électronique (10) en utilisant une application de collecte d'attributs (12) résidant dans le dispositif électronique (10) ; et
rechercher dans un inventaire existant ces enregistrements (24) de plusieurs dispositifs électroniques en utilisant une application d'identification (22) résidant dans un serveur distant (20), pour identifier dans l'inventaire un enregistrement unique correspondant au dispositif électronique (10) ;
caractérisé en déterminant, pour le premier des attributs, combien d'enregistrements existants dans l'inventaire possèdent le premier attribut ;
en quoi, si un seul enregistrement dans l'inventaire comporte le premier attribut, déterminer que l'enregistrement existant dans l'inventaire est un enregistrement unique ; et
en quoi, si aucun ou si plusieurs enregistrements existants dans l'inventaire comportent le premier attribut, déterminer qu'il y a un seul enregistrement existant dans l'inventaire ayant un second des attributs et déterminer que l'enregistrement existant dans l'inventaire est un enregistrement unique dans l'inventaire ;
**caractérisé de plus par le fait que** l'application d'identification (22) détermine l'identité du dispositif (10) de l'enregistrement unique dans l'inventaire si l'on détermine qu'un nombre inférieur à un nombre prédéterminé d'attributs collectés sont différents des attributs correspondants dans l'enregistrement unique dans l'inventaire ;
en quoi, si l'on détermine que le nombre prédéterminé des attributs collectés est différent, le dispositif (10) est déterminé comme étant un nouveau dispositif, et un nouvel identificateur est affecté au dispositif (10).

2. La méthode conforme à la revendication 1, méthode consistant à consulter un tableau d'exceptions pour déterminer que le premier attribut ne se trouve pas dans le tableau des exceptions avant de déterminer combien d'enregistrements existants dans l'inventaire comportent le premier attribut, étant donné que le tableau des exceptions comprend une liste des attributs qui ne sont pas uniques.

3. La méthode conforme à la revendication 2, méthode consistant à consulter le tableau des exceptions pour déterminer que le second attribut ne se trouve pas dans le tableau des exceptions avant de déterminer combien d'enregistrements existants dans l'inventaire possèdent le second attribut.

4. La méthode conforme à la revendication 1, consistant en outre à communiquer plusieurs des attributs au serveur distant.

5. La méthode conforme à la revendication 1, dans laquelle l'étape de recherche consiste à faire correspondre plusieurs attributs aux attributs correspondants stockés dans les enregistrements existants (24) pour plusieurs dispositifs électroniques.

6. La méthode conforme à la revendication 1, consistant en outre à affecter un identificateur au dispositif (10) si un identificateur n'a pas été précédemment affecté au dispositif (10) ou si un identificateur valide n'est pas disponible pour le dispositif (10).

7. La méthode conforme à la revendication 6, dans laquelle l'identificateur est affecté en récupérant l'identificateur de l'enregistrement unique.

8. La méthode de la revendication 1, dans laquelle les attributs comprennent des points de données concernant l'équipement et/ou le logiciel déployés dans le dispositif (10).

9. La méthode de la revendication 8, consistant à déterminer, pour chacun des attributs dans la séquence, si un seul enregistrement existant dans l'inventaire comporte l'attribut et, dans ce cas déterminer que l'enregistrement existant dans l'inventaire est un enregistrement unique d'un inventaire.

10. La méthode de la revendication 9, dans laquelle, après avoir identifié un enregistrement unique dans l'inventaire et un identificateur associé à l'enregistrement unique dans l'inventaire est affecté au dispositif (10).

11. La méthode conforme à l'une des revendications 8 à 10, dans laquelle les points de données comprennent au moins deux des données suivantes :
i. Marque et/ou modèle du dispositif ;
ii. Numéro de série de la carte mère du dispositif ;
iii. UUID du dispositif (identificateur unique universel) ;
iv. Numéro de série du disque dur ;
v. Adresse MAC de plusieurs cartes réseau ;
vi. Numéro de série de mémoire vive RAM ; et
vii. Numéro de série de batterie.

12. Un dispositif électronique (10) comprenant un attribut application de collecte 3 (12) qui collecte plusieurs attributs incluant les points de données concernant l'équipement et/ou le logiciel déployé dans le dispositif (10), dont les attributs sont transmis à un serveur distant (20) pour identifier un enregistrement unique dans l'inventaire correspondant au dispositif (10) en
déterminant, pour le premier des attributs, combien d'enregistrements existants dans l'inventaire comportent le premier attribut,
en quoi, si un seul enregistrement existant dans l'inventaire comporte le premier attribut, déterminer que l'enregistrement existant dans l'inventaire est un enregistrement unique ; et
en quoi, si aucun ou plusieurs enregistrements existants dans l'inventaire comportent le premier attribut, déterminer qu'il y a un seul enregistrement existant dans l'inventaire possédant un second des attributs, et déterminer que l'enregistrement existant dans l'inventaire est un enregistrement unique ;
en quoi l'identité du dispositif (10) est déterminée en se basant sur l'enregistrement unique dans l'inventaire, si un nombre inférieur à un nombre prédéterminé des attributs collectés est différent du nombre des attributs correspondants dans l'enregistrement unique dans l'inventaire,
en quoi, si l'on détermine que le nombre prédéterminé des attributs collectés est différent, le dispositif (10) est déterminé comme étant un nouveau dispositif, et un nouvel identificateur est affecté au dispositif (10).

13. Un serveur (20) pour identifier à distance un dispositif électronique (10) connecté à un réseau, comprenant une application d'identification (22) recevant plusieurs des attributs, incluant les points de données concernant l'équipement et/ou le logiciel déployés dans le dispositif (10), et qui recherche les enregistrements existants (24) parmi plusieurs dispositifs électroniques pour identifier, à partir des attributs, un enregistrement unique correspondant au dispositif (10) en déterminant, pour le premier des attributs, combien d'enregistrements existants dans l'inventaire comportent le premier attribut,
en quoi, si un seul enregistrement existant dans l'inventaire comporte le premier attribut, le serveur détermine que l'enregistrement existant dans l'inventaire est le seul enregistrement dans l'inventaire ; et en quoi, si aucun ou plusieurs enregistrements existants dans l'inventaire comportent le premier attribut, le serveur détermine qu'il existe un seul enregistrement existant dans l'inventaire ayant un second des attributs et détermine que l'enregistrement existant dans l'inventaire est un enregistrement unique ;
en quoi le serveur détermine l'identité du dispositif (10) à partir de l'enregistrement unique s'il a été identifié et si un nombre inférieur à un nombre prédéterminé des attributs collectés est différent du nombre des attributs correspondants dans l'enregistrement unique dans l'inventaire, en quoi, si l'on détermine que le nombre prédéterminé des attributs collectés est différent, le dispositif (10) sera considéré comme un nouveau dispositif, et un nouveau identificateur est affecté au dispositif (10).

14. Le serveur de la revendication 13, dans lequel le serveur consulte un tableau d'exceptions pour déterminer que le premier attribut ne se trouve pas dans le tableau des exceptions avant de déterminer combien d'enregistrements existants dans l'inventaire comportent le premier attribut, étant donné que le tableau des exceptions comprend une liste des attributs qui ne sont pas uniques.

15. Le serveur de la revendication 14, dans lequel le serveur consulte le tableau des exceptions pour déterminer que le second attribut ne se trouve pas dans le tableau des exceptions avant de déterminer combien d'enregistrements existants dans l'inventaire comportent le second attribut.
